(19) Europäisches Patentamt
European Patent Office
Office européen des brevets

(11) **EP 4 170 603 B1**

(12) **FASCICULE DE BREVET EUROPEEN**

(45) Date de publication et mention
de la délivrance du brevet:
**10.12.2025 Bulletin 2025/50**

(21) Numéro de dépôt: **22203071.0**

(22) Date de dépôt: **21.10.2022**

(51) Classification Internationale des Brevets (IPC):
**G06V 20/52** *(2022.01)*

(52) Classification Coopérative des Brevets (CPC):
**G06V 20/52**

(54) **PROCÉDÉ AUTOMATIQUE DE DÉTECTION D'OBJETS DANS UN FLUX D'IMAGES**

AUTOMATISCHES VERFAHREN ZUR DETEKTION VON OBJEKTEN IN EINEM BILDSTROM

AUTOMATIC METHOD FOR DETECTING OBJECTS IN AN IMAGE STREAM

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **22.10.2021 FR 2111235**

(43) Date de publication de la demande:
**26.04.2023 Bulletin 2023/17**

(73) Titulaire: **Alyce
92330 Sceaux (FR)**

(72) Inventeur: **CORVO, Joris
92330 Sceaux (FR)**

(74) Mandataire: **Cabinet Camus Lebkiri
25 rue de Maubeuge
75009 Paris (FR)**

(56) Documents cités:
**EP-A1- 2 891 990      US-A1- 2021 264 153**

- **HONGLIANG LI ET AL: "Automatic video
segmentation and tracking for content-based
applications", IEEE COMMUNICATIONS
MAGAZINE, IEEE SERVICE CENTER,
PISCATAWAY, US, vol. 44, no. 1, 1 January 2007
(2007-01-01), pages 27 - 33, XP011156145, ISSN:
0163-6804**
- **CHENGE LI ET AL: "TrackNet: Simultaneous
Object Detection and Tracking and Its
Application in Traffic Video Analysis",
ARXIV.ORG, CORNELL UNIVERSITY LIBRARY,
201 OLIN LIBRARY CORNELL UNIVERSITY
ITHACA, NY 14853, 4 February 2019 (2019-02-04),
XP081025313**

EP 4 170 603 B1

## Description

### DOMAINE TECHNIQUE DE L'INVENTION

Le domaine technique de l'invention est celui de la détection d'objets dans un flux d'images, et plus particulièrement celui de la détection d'objets dans un flux d'images dans un contexte embarqué.

La présente invention concerne un procédé de détection d'objets dans un flux d'images, et en particulier un procédé automatique de détection d'objets dans un flux d'images implémentable sur un microprocesseur. La présente invention concerne également un calculateur, un dispositif embarquant le calculateur, un produit-programme d'ordinateur et un support d'enregistrement pour la mise en œuvre du procédé selon l'invention.

### ARRIERE-PLAN TECHNOLOGIQUE DE L'INVENTION

Pour détecter des objets dans une image, il est connu d'avoir recours à des techniques d'apprentissage profond ou deep learning, souvent basées sur des réseaux de neurones artificiels, permettant d'obtenir des taux de détection élevés. Détecter des objets dans un flux d'images consiste alors à détecter les objets compris dans chaque image constituant le flux d'images.

Cependant, de telles techniques nécessitent l'utilisation de processeurs puissants et d'une quantité importante de ressources mémoire pour être fonctionnelles et sont très coûteuse en termes de temps de calcul et d'énergie.

Ainsi, ces techniques sont incompatibles avec une implémentation sur microprocesseur contraint en termes de ressources de calcul mais ayant un haut degré d'intégration grâce à ses dimensions réduites.

Il existe donc un besoin de concevoir un algorithme de détection d'objets dans un flux d'images, ayant des performances de détection comparables à celles obtenues avec les techniques connues de détection d'objets, et implémentable sur un microprocesseur pouvant être embarqué sur n'importe quel dispositif quel que soit son environnement.

US 2021/264153 A1 divulgue un procédé automatique de détection d'objets dans un flux d'images implémentée sur un microprocesseur.

### RESUME DE L'INVENTION

L'invention, telle que définie dans les revendications annexées, offre une solution aux problèmes évoqués précédemment, en permettant de détecter précisément des objets dans un flux d'images grâce à un algorithme implémentable sur un microprocesseur ayant une haute capacité d'intégration.

Un premier mode de réalisation d'un premier aspect de l'invention concerne un procédé automatique de détection d'objets dans un flux d'images, implémentable sur un microprocesseur, le flux d'images comprenant une pluralité d'ensembles d'images successifs ayant chacun pour image initiale une première image et pour image finale une dernière image, le procédé comportant les étapes suivantes pour chaque ensemble d'images du flux d'images :

- Si aucune détection n'a été réalisée pour l'image initiale de l'ensemble d'images, détection de chaque objet présent dans l'image initiale à l'aide d'un réseau de neurones artificiels pour obtenir un ensemble d'objets initial affecté à l'image initiale, le réseau de neurones artificiels ayant été préalablement entraîné de manière supervisée sur une base de données d'entraînement pour obtenir un réseau de neurones artificiels entraîné capable de détecter à partir d'une image, chaque objet dans l'image, la base de données d'entraînement comprenant une pluralité d'images chacune associée à la position de chaque objet dans l'image ;

- Si aucune détection n'a été réalisée pour l'image finale de l'ensemble d'images, détection de chaque objet présent dans l'image finale à l'aide du réseau de neurones artificiels pour obtenir un ensemble d'objets final affecté à l'image finale ;

- Si une première condition selon laquelle l'ensemble d'objets initial comporte le même nombre d'objets que l'ensemble d'objets final et une deuxième condition selon laquelle chaque objet de l'ensemble d'objets initial répond à une première condition de couplage avec un objet de l'ensemble d'objets final différent sont vérifiées, affectation d'un ensemble d'objets à chaque image de l'ensemble d'images comprise entre l'image initiale et l'image finale, l'ensemble d'objets étant obtenu par interpolation linéaire à partir de l'ensemble d'objets initial et de l'ensemble d'objets final, la première condition de couplage portant sur une distance géométrique calculée entre chaque objet de l'ensemble d'objets initial et l'objet de l'ensemble d'objets final différent, l'interpolation linéaire interpolant la position de chaque objet de l'ensemble d'objets dans chaque image de l'ensemble d'images comprise entre l'image initiale et l'image finale à partir de la position dans l'image initiale des objets de l'ensemble d'objets initial et de la position dans l'image finale des objets de l'ensemble d'objets final différent;

- Sinon, découpage de l'ensemble d'images en un premier sous-ensemble d'images ayant pour image initiale la première image de l'ensemble d'images et pour image finale une image intermédiaire de l'ensemble d'images comprise entre l'image initiale et l'image finale de l'ensemble d'images, et en un deuxième sous-ensemble d'images ayant pour image initiale l'image intermédiaire et pour image finale la dernière image de l'ensemble d'images, puis réalisation des étapes précédentes pour le premier sous-ensemble d'images et pour le deuxième sous-ensemble d'images.

Grâce à l'invention, le flux d'images est traité par ensemble d'images et la détection par le réseau de neurones artificiels n'est dans un premier temps réalisée que pour la première image et la dernière image de l'ensemble d'images. Si le même nombre d'objets est détecté dans la première image et dans la dernière image et que chaque objet détecté dans la première image peut être couplé à un objet de la dernière image différent, on considère que chaque objet détecté dans la première image est également détecté dans la dernière image et qu'aucun objet n'est apparu entre la première image et la dernière image. La position de chaque objet est alors interpolée linéairement dans chaque image de l'ensemble d'images comprise entre la première image et la dernière image, à partir de sa position dans la première image et de sa position dans la dernière image, et aucune autre détection n'est alors réalisée par le réseau de neurones artificiels pour l'ensemble d'images.

Si le nombre d'objets détecté dans la première image est différent du nombre d'objets détecté dans la dernière image ou qu'au moins un objet détecté dans la première image ne peut être couplé à un objet de la dernière image, on considère qu'au moins un objet est apparu, a disparu ou s'est déplacé entre la première image et la dernière image et donc que de l'information concernant l'apparition, la disparation ou le déplacement d'un objet est manquante. Une détection par le réseau de neurones artificiels est alors réalisée sur une image intermédiaire de l'ensemble d'images et les mêmes conditions sont vérifiées entre la première image et l'image intermédiaire d'une part, et entre l'image intermédiaire et la dernière image d'autre part, et les mêmes étapes que précédemment décrites sont réalisées en fonction du résultat de la vérification jusqu'à ce que toutes les images de l'ensemble d'images soient affectés d'un ensemble d'objets obtenu soit par détection ou soit par interpolation.

Ainsi, la détection par le réseau de neurones artificiels n'est réalisée que quand de l'information concernant l'apparition, la disparation ou le déplacement d'un objet semble manquante en considérant les ensembles d'objets déjà obtenus par le réseau de neurones artificiels, ce qui permet de diminuer les ressources de calcul utilisées et d'augmenter la vitesse de traitement, et rend ainsi le procédé implémentable sur un microprocesseur, tout en maintenant un taux de détection élevé propre à l'utilisation d'un réseau de neurones artificiels.

Selon une variante de réalisation, le procédé selon le premier mode de réalisation de l'invention comporte les étapes suivantes si la première condition est vérifiée et si la deuxième condition n'est pas vérifiée pour le premier sous-ensemble d'images ou le deuxième sous-ensemble d'images :

- Détection de chaque objet présent dans l'image intermédiaire à l'aide du réseau de neurones artificiels pour obtenir un ensemble d'objets intermédiaire affecté à l'image intermédiaire ;

- Si une troisième condition est vérifiée, la deuxième condition est considérée comme vérifiée, la troisième condition étant vérifiée pour le premier sous-ensemble d'images si l'ensemble d'objets initial comporte le même nombre d'objets que l'ensemble d'objets intermédiaire et si chaque objet de l'ensemble d'objets initial répond à une deuxième condition de couplage avec un objet de l'ensemble d'objets intermédiaire différent et pour le deuxième sous-ensemble d'images si l'ensemble d'objets intermédiaire comporte le même nombre d'objets que l'ensemble d'objets final et si chaque objet de l'ensemble d'objets intermédiaire répond à la deuxième condition de couplage avec un objet de l'ensemble d'objets final différent.

Ainsi, dans le cas où les étapes sont réalisées pour un sous-ensemble d'images, c'est-à-dire après au moins une première étape de découpage de l'ensemble d'images, si le même nombre d'objets est détecté dans l'image initiale et l'image finale du sous-ensemble d'images mais qu'au moins un objet détecté dans l'image initiale ne peut être couplé à un objet de l'image finale, le réseau de neurones artificiels est utilisé sur l'image intermédiaire du sous-ensemble d'images pour obtenir un ensemble d'objets intermédiaire.

Si le sous-ensemble d'images est le premier sous-ensemble d'images, on vérifie si le même nombre d'objets est détecté dans la première image et dans l'image intermédiaire et si chaque objet détecté dans la première image peut être couplé à un objet de l'image intermédiaire différent. Si le sous-ensemble d'images est le deuxième sous-ensemble d'images, on vérifie si le même nombre d'objets est détecté dans l'image intermédiaire et dans la dernière image et si chaque objet détecté dans l'image intermédiaire peut être couplé à un objet de la dernière image différent.

Si la condition est vérifiée, on considère respectivement que chaque objet détecté dans la première image est également détecté dans l'image intermédiaire ou que chaque objet détecté dans l'image intermédiaire est également détecté dans la dernière image et donc qu'aucune information concernant l'apparition, la disparation ou le déplacement d'un objet n'est finalement manquante et qu'il n'y a donc pas besoin de faire une nouvelle étape de découpage. Le nombre d'étapes de détection par le réseau de neurones artificiels est donc encore davantage limité.

Selon une variante de réalisation :

- L'étape de détection de chaque objet présent dans l'image initiale consiste en outre à déterminer un ou plusieurs scores de catégorie, à l'aide d'un réseau de neurones artificiels entraîné, pour chaque objet de l'ensemble d'objets initial, et à attribuer une catégorie à chaque objet de l'ensemble d'objets initial ;

- L'étape détection de chaque objet présent dans l'image finale consiste en outre à déterminer un ou plusieurs scores de catégorie, à l'aide d'un réseau de neurones artificiels entraîné, pour chaque objet de l'ensemble d'objets final et à attribuer une catégorie à chaque objet de l'ensemble d'objets final ;
- L'étape d'affectation d'un ensemble d'objets à chaque image de l'ensemble d'images consiste en outre à attribuer une catégorie à chaque objet de l'ensemble d'objets de chaque image de l'ensemble d'images comprise entre l'image initiale et l'image finale, la catégorie de chaque objet de l'ensemble d'objets étant calculée par interpolation linéaire à partir de l'ensemble d'objets initial et de l'ensemble d'objets final.

Il est ainsi possible de classifier les objets détectés dans le flux d'images et de déterminer si la catégorie de l'un ou plusieurs de ces objets évolue au cours du flux d'images

Un deuxième mode de réalisation du premier aspect de l'invention concerne un procédé automatique de détection d'objets dans un flux d'images, implémentable sur un microprocesseur, le flux d'images comprenant une pluralité d'ensembles d'images successifs, le procédé comportant les étapes suivantes :

- Pour chaque ensemble d'images comportant au moins une image à laquelle aucun ensemble d'objets n'est affecté :
- Calcul d'un critère visuel entre la première image de l'ensemble d'images et la dernière image de l'ensemble d'images, le critère visuel étant déterminé à partir d'une distance, d'une différence ou d'une corrélation entre la première 30 image (11) de l'ensemble d'images (Ei) et la dernière image (In) de l'ensemble d'images (Ei);
- Si une quatrième condition selon laquelle le critère visuel ne répond pas à une condition de similitude est vérifiée, les étapes du procédé selon le premier mode de réalisation de l'invention sont réalisées pour l'ensemble d'images ayant pour dernière image, la dernière image ayant servi au calcul du critère visuel vérifiant la quatrième condition ;
- Si la quatrième condition n'est pas vérifiée :

  - Si aucune détection n'a été réalisée pour la première image de l'ensemble d'images, détection de chaque objet présent dans la première image à l'aide du réseau de neurones artificiels entraîné, pour obtenir un premier ensemble d'objets affecté à la première image ;
  - Affectation du premier ensemble d'objets à chaque image de l'ensemble d'images, puis réalisation des étapes précédentes pour la dernière image de l'ensemble d'images suivant l'ensemble d'images dans le flux d'images.

Ainsi, une étape de détection par le réseau de neurones artificiels est réalisée pour la première image d'un premier ensemble d'images et tant qu'un critère visuel entre la première image du premier ensemble d'images et la dernière image d'un deuxième ensemble d'images égal ou suivant le premier ensemble d'images est inférieur à un seuil, l'ensemble d'objets obtenu pour la première image est affecté à chaque image comprise entre la première image du premier ensemble d'images et la dernière image du deuxième ensemble d'images dans le flux d'images. Il n'y a donc qu'une unique détection par le réseau de neurones artificiels réalisée tant que la condition sur le critère visuel est vérifiée. Dès que la condition sur le critère visuel n'est pas vérifiée, les étapes du premier mode de réalisation du procédé selon l'invention sont réalisées pour le deuxième ensemble d'images. Le nombre d'étapes de détection par le réseau de neurones artificiels est donc encore davantage limité

Selon une variante de réalisation du premier mode de réalisation ou du deuxième mode de réalisation du procédé selon l'invention, les objets à détecter sont des usagers de la route.

Pour une telle application, le procédé selon l'invention permet d'obtenir une économie de temps de calcul de 90% sans détérioration du taux de détection si les usagers à détecter sont sur une route à une ou deux voies avec un trafic faible, c'est-à-dire inférieur à 300 usagers par heure, une économie de temps de calcul de 50% sans détérioration du taux de détection si les usagers à détecter sont dans une zone urbaine avec un trafic moyen, c'est-à-dire d'environ 1500 usagers par heure, et une économie de temps de calcul de 20% sans détérioration du taux de détection si les usagers à détecter sont sur une autoroute avec un trafic fort, c'est-à-dire supérieur à 5000 usagers par heure,.

Un deuxième aspect de l'invention concerne un calculateur pour la mise en œuvre du procédé selon l'invention, comportant :

- un module de lecture d'images configuré pour lire le flux d'images et fournir au moins une image composant le flux d'images ;
- un module de détection configuré pour détecter à partir d'une image fournie par le module de lecture ou par un module d'analyse, chaque objet présent dans l'image à l'aide d'un réseau de neurones artificiels entraîné, pour obtenir un ensemble d'objets et fournir chaque ensemble d'objets obtenu ;
- le module d'analyse configuré pour vérifier chaque condition, calculer et affecter un ensemble d'objets à une image fournie par le module de lecture à partir d'au moins un ensemble d'objets fourni par le module de détection et pour fournir des images au module de détection en cas de découpage d'un ensemble d'images.

Selon une variante de réalisation, le calculateur selon l'invention est un microprocesseur.

Selon une variante de réalisation compatible avec la variante de réalisation précédente, le calculateur selon l'invention comporte en outre un module de détection visuelle configuré pour calculer un critère visuel à partir d'images fournies par le module de lecture d'images et fournir le critère visuel calculé au module d'analyse.

Un troisième aspect de l'invention concerne un dispositif embarquant un calculateur selon l'invention.

Un quatrième aspect de l'invention concerne un produit-programme d'ordinateur comprenant des instructions qui, lorsque le programme est exécuté par un ordinateur, conduisent celui-ci à mettre en œuvre les étapes du procédé selon le premier mode de réalisation ou le deuxième mode de réalisation de l'invention.

Un cinquième aspect de l'invention concerne un support d'enregistrement lisible par ordinateur comprenant des instructions qui, lorsqu'elles sont exécutées par un ordinateur, conduisent celui-ci à mettre en œuvre les étapes du procédé selon le premier mode de réalisation ou le deuxième mode de réalisation de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique d'un flux d'images et d'une étape de découpage d'un procédé selon un premier mode de réalisation de l'invention.
- La figure 2 est un schéma synoptique illustrant l'enchaînement des étapes du procédé selon un premier mode de réalisation de l'invention.
- La figure 3 est un schéma synoptique illustrant l'enchaînement des étapes du procédé selon un deuxième mode de réalisation de l'invention.
- La figure 4 montre une représentation schématique d'un calculateur selon l'invention.

## DESCRIPTION DETAILLEE

Sauf précision contraire, un même élément apparaissant sur des figures différentes présente une référence unique.

Un premier aspect de l'invention concerne un procédé de détection d'objets dans un flux d'images, le flux d'images étant constitué d'une succession d'ensembles d'images comportant chacun une pluralité d'images.

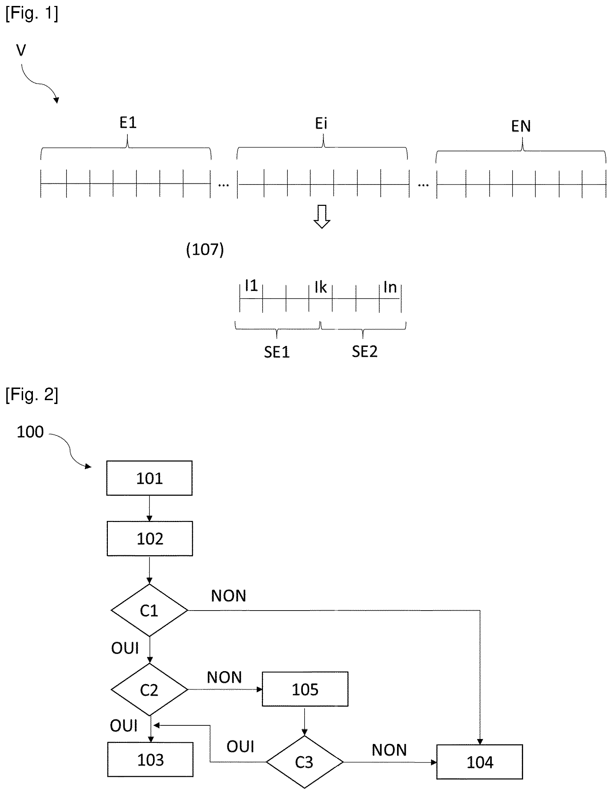

[Fig. 1] La figure 1 montre une représentation schématique du flux d'images V.

Sur la figure 1, le flux d'images V comporte N ensembles d'images parmi lesquels un premier ensemble d'images E1, un i-ème ensemble d'images Ei et un dernier ensemble d'images EN.

De préférence, chaque ensemble d'images Ei comporte le même nombre d'images.

Sur la figure 1, chaque ensemble d'images Ei comporte n images, parmi lesquelles une première image I1 et une dernière image In.

n vaut par exemple 8.

On entend par « détection d'objets dans un flux d'images », la détection de chaque objet dans chaque image constituant le flux d'images V, et on entend par « détection de chaque objet dans une image », la détermination de la position de chaque objet à détecter dans l'image, par exemple par l'identification des coordonnées d'une fenêtre englobant l'objet.

La fenêtre est par exemple un rectangle dont chaque côté est en contact avec au moins un point du contour extérieur de l'objet et les coordonnées de la fenêtre sont par exemple les coordonnées du coin supérieur gauche et du coin inférieur droit de la fenêtre.

Le procédé selon l'invention vise donc à obtenir pour chaque image du flux d'images V, la position dans l'image de chaque objet présent dans l'image.

Les objets à détecter peuvent être des objets animés, par exemple des personnes ou des animaux, ou des objets inanimés, par exemple des véhicules ou des colis.

[Fig. 2] La figure 2 est un schéma synoptique illustrant l'enchaînement des étapes d'un premier mode de réalisation du procédé 100 selon l'invention.

Le premier mode de réalisation du procédé 100 selon l'invention comporte des étapes réalisées pour chaque ensemble d'images Ei du flux d'images V en considérant la première image I1 de l'ensemble d'images Ei comme image initiale et la dernière image In de l'ensemble d'images Ei comme image finale.

Une première étape 101 du premier mode de réalisation du procédé 100 selon l'invention consiste à détecter chaque objet présent dans l'image initiale de l'ensemble d'images Ei à l'aide d'un réseau de neurones artificiels entraîné, et permet d'obtenir un ensemble d'objets initial, chaque objet de l'ensemble d'objets initial étant associé à sa position dans l'image initiale, par exemple aux coordonnées d'une fenêtre englobant l'objet.

L'ensemble d'objets initial est affecté à l'image initiale.

Le réseau de neurones artificiels a été préalablement entraîné de manière supervisée sur une base de données d'entraînement pour obtenir un réseau de neurones artificiels entraîné capable de détecter à partir d'une image, chaque objet dans l'image, c'est-à-dire capable de fournir pour chaque objet présent dans l'image, sa position dans l'image.

Le réseau de neurones artificiels utilisé est par exemple un réseau de neurones artificiels de détection d'objets pouvant intégrer des couches de convolution d'images, tels que les réseaux de neurones artificiels YOLO, Faster RCNN, RetinaNet ou SSD.

L'entraînement supervisé permet d'entraîner le réseau de neurones artificiels à une tâche prédéfinie, en mettant à jour les paramètres ou poids du réseau de neurones artificiels de manière à minimiser une fonction de coût correspondant à l'erreur entre la donnée de sortie fournie par le réseau de neurones artificiels et la vraie donnée de sortie, c'est-à-dire ce que le réseau de neurones artificiels devrait fournir en sortie pour remplir la tâche prédéfinie sur une certaine donnée d'entrée.

Une base de données d'entraînement comporte donc des données d'entrée, chacune associée à une vraie donnée de sortie.

La base de données d'entraînement comporte une pluralité d'images et pour chaque image, la position de chaque objet dans l'image, par exemple les coordonnées d'une fenêtre englobante pour chaque objet présent dans l'image.

Ainsi, les données d'entrée sont les images et les vraies données de sortie sont les positions des objets.

L'apprentissage supervisé du réseau de neurones artificiels consiste donc à mettre à jour les paramètres de manière à minimiser une fonction de coût correspondant à l'erreur entre chaque position fournie par le réseau de neurones artificiels à partir d'une image de la base de données d'entraînement et la vraie position associée à l'image dans la base de données d'entraînement.

La première étape 101 est réalisée uniquement si aucune détection n'a encore été réalisée pour l'image initiale de l'ensemble d'images Ei.

Une deuxième étape 102 du premier mode de réalisation du procédé 100 selon l'invention consiste à détecter chaque objet présent dans l'image finale de l'ensemble d'images Ei à l'aide du réseau de neurones artificiels entraîné et permet d'obtenir un ensemble d'objets final, chaque objet de l'ensemble d'objets final étant associé à sa position dans l'image finale, par exemple aux coordonnées d'une fenêtre englobant l'objet.

L'ensemble d'objets final est affecté à l'image finale.

La deuxième étape 102 est réalisée uniquement si aucune détection n'a encore été réalisée pour l'image finale de l'ensemble d'images Ei.

Si une première condition C1 et une deuxième condition C2 sont vérifiées, une troisième étape 103 du premier mode de réalisation du procédé 100 selon l'invention est réalisée.

La première condition C1 est vérifiée si l'ensemble d'objets initial obtenu à la première étape 101 a le même cardinal que l'ensemble d'objets final obtenu à la deuxième étape 102, c'est-à-dire que l'ensemble d'objets initial comporte le même nombre d'objets que l'ensemble d'objets final.

On entend par « cardinal d'un ensemble », le nombre d'éléments compris dans l'ensemble.

La deuxième condition C2 est vérifiée si chaque objet de l'ensemble d'objets initial répond à une première condition de couplage avec un objet de l'ensemble d'objets final différent, c'est-à-dire si chaque objet de l'ensemble d'objets initial peut être associé à un objet de l'ensemble d'objets final et non associé à un autre objet de l'ensemble d'objets initial.

Dans le cas où chaque objet de l'ensemble d'objets initial et chaque objet de l'ensemble d'objets final sont associés aux coordonnées d'une fenêtre englobante, un objet de l'ensemble d'objets initial répond par exemple à la première condition de couplage avec un objet de l'ensemble d'objets final si l'intersection sur l'union ou IoU (pour « Intersection over Union » en anglais), entre la fenêtre englobante associé à l'objet de l'ensemble d'objets initial et la fenêtre englobante de l'objet de l'ensemble d'objets final est supérieure à un premier seuil. Plus généralement, l'un des objets de l'ensemble d'objets initial est associé à l'un des objets de l'ensemble d'objets final si une distance géométrique calculée entre ces deux objets est inférieure au premier seuil, la distance géométrique étant préférentiellement calculée entre la fenêtre englobante de chacun des deux objets.

Le premier seuil vaut par exemple 80%.

On entend par « intersection sur l'union entre une première fenêtre et une deuxième fenêtre », le rapport entre la surface d'intersection entre la première fenêtre et la deuxième fenêtre, et la surface d'union entre la première fenêtre et la deuxième fenêtre.

La troisième étape 103 consiste à affecter un ensemble d'objets à chaque image de l'ensemble d'images Ei comprise entre l'image initiale et l'image finale.

Chaque ensemble d'objets est calculé par interpolation linéaire à partir de l'ensemble d'objets initial et de l'ensemble d'objets final.

Chaque ensemble d'objets comporte donc le même nombre d'objets que l'ensemble d'objets initial et l'ensemble d'objets final et la troisième étape 103 consiste alors à créer un objet de l'ensemble d'objets par objet de l'ensemble d'objets initial et à associer l'objet à une position dans l'image obtenue par interpolation linéaire entre la position dans l'image initiale de l'objet de l'ensemble d'objets initial et la position dans l'image finale de l'objet de l'ensemble d'images final correspondant, c'est-à-dire de l'objet de l'ensemble d'images final répondant à la première condition de couplage avec l'objet de l'ensemble d'images initial.

A la fin de la troisième étape 103, un ensemble d'objets est affecté à chaque image de l'ensemble d'images Ei, et donc chaque objet présent dans l'ensemble d'images Ei a été détecté.

Si la première condition C1 n'est pas vérifiée ou si la deuxième condition C2 n'est pas vérifiée, une quatrième étape 104 du premier mode de réalisation du procédé 100 selon l'invention est réalisée.

La quatrième étape 104 consiste à découper l'ensemble d'images Ei en un premier sous-ensemble d'images SE1 ayant pour image initiale la première image I1 de l'ensemble d'images Ei et pour image finale une image intermédiaire Ik de l'ensemble d'images Ei et en un deuxième sous-ensemble d'images SE2 ayant pour image initiale l'image intermédiaire Ik et pour image finale la dernière image In de l'ensemble d'images Ei. On entend par « image intermédiaire » n'importe quelle image comprise entre l'image initiale et l'image finale de l'ensemble d'images Ei, par exemple l'image du milieu du de l'ensemble d'images Ei.

L'image intermédiaire Ik de l'ensemble d'images Ei est comprise entre l'image initiale et l'image finale de l'ensemble d'images Ei, comme illustré sur la figure 1.

Le premier sous-ensemble d'images SE1 comporte par exemple le même nombre d'images que le deuxième sous-ensemble SE2.

Les étapes précédemment décrites sont ensuite réalisées :

- pour le premier sous-ensemble d'images SE1, c'est-à-dire que la deuxième étape 102 est réalisée pour l'image finale du premier sous-ensemble d'images SE1, à savoir l'image intermédiaire Ik, si la première condition C1 et la deuxième condition C2 sont vérifiées, la troisième étape 103 est réalisée pour chaque image du premier sous-ensemble d'images SE1 et si la première condition C1 ou la deuxième condition C2 n'est pas vérifiée, la quatrième étape 104 est réalisée en choisissant une image intermédiaire comprise entre l'image initiale et l'image finale du premier sous-ensemble d'images SE1, et ainsi de suite. La première étape 101 n'est pas réalisée puisqu'une détection a déjà été réalisée pour l'image initiale du premier sous-ensemble d'images SE1, qui correspond à la première image I1 de l'ensemble d'images Ei ; puis

- pour le deuxième sous-ensemble d'images SE2, c'est-à-dire que si la première condition C1 et la deuxième condition C2 sont vérifiées, la troisième étape 103 est réalisée pour chaque image du deuxième sous-ensemble d'images SE2 et si la première condition C1 ou la deuxième condition C2 n'est pas vérifiée, la quatrième étape 104 est réalisée en choisissant une image intermédiaire comprise entre l'image initiale et l'image finale du deuxième sous-ensemble d'images SE2, et ainsi de suite. La première étape 101 n'est pas réalisée puisqu'une détection a déjà été réalisée pour l'image initiale du premier sous-ensemble d'images SE1, qui correspond à l'image intermédiaire Ik, et la deuxième étape 102 n'est pas réalisée pour l'image finale du deuxième sous-ensemble d'images SE2, qui correspond à la dernière image In de l'ensemble d'images Ei.

Si les étapes sont réalisées pour un sous-ensemble d'images, c'est-à-dire pour le premier sous-ensemble d'images SE1 ou le deuxième sous-ensemble d'images SE2, le premier mode de réalisation du procédé 100 selon l'invention peut comporter une cinquième étape 105 si la première condition C1 est vérifiée mais que la deuxième condition C2 n'est pas vérifiée.

La cinquième étape 105 consiste à détecter de chaque objet présent dans l'image intermédiaire Ik du sous-ensemble d'images à l'aide du réseau de neurones artificiels entraîné et permet d'obtenir un ensemble d'objets intermédiaire, chaque objet de l'ensemble d'objets intermédiaire étant associé à sa position dans l'image intermédiaire Ik, par exemple aux coordonnées d'une fenêtre englobant l'objet.

Si une troisième condition C3 est vérifiée, la deuxième condition C2 est finalement considérée comme vérifiée et la troisième étape 103 est réalisée pour le sous-ensemble d'images.

Si le sous-ensemble d'images considéré est le premier sous-ensemble d'images, la troisième condition C3 est vérifiée si l'ensemble d'objets initial comporte le même nombre d'objets que l'ensemble d'objets intermédiaire et si chaque objet de l'ensemble d'objets initial répond à une deuxième condition de couplage avec un objet de l'ensemble d'objets intermédiaire différent.

Dans le cas où chaque objet de l'ensemble d'objets initial et chaque objet de l'ensemble d'objets intermédiaire sont associés aux coordonnées d'une fenêtre englobante, un objet de l'ensemble d'objets initial répond par exemple à la deuxième condition de couplage avec un objet de l'ensemble d'objets intermédiaire si l'IoU entre la fenêtre englobante associé à l'objet de l'ensemble d'objets initial et la fenêtre englobante de l'objet de l'ensemble d'objets intermédiaire est supérieure à un deuxième seuil.

Le deuxième seuil vaut par exemple 90%.

Si le sous-ensemble d'images considéré est le deuxième sous-ensemble d'images, la troisième condition C3 est vérifiée si l'ensemble d'objets intermédiaire comporte le même nombre d'objets que l'ensemble d'objets final et si chaque objet de l'ensemble d'objets intermédiaire répond à la deuxième condition de couplage avec un objet de l'ensemble d'objets final différent.

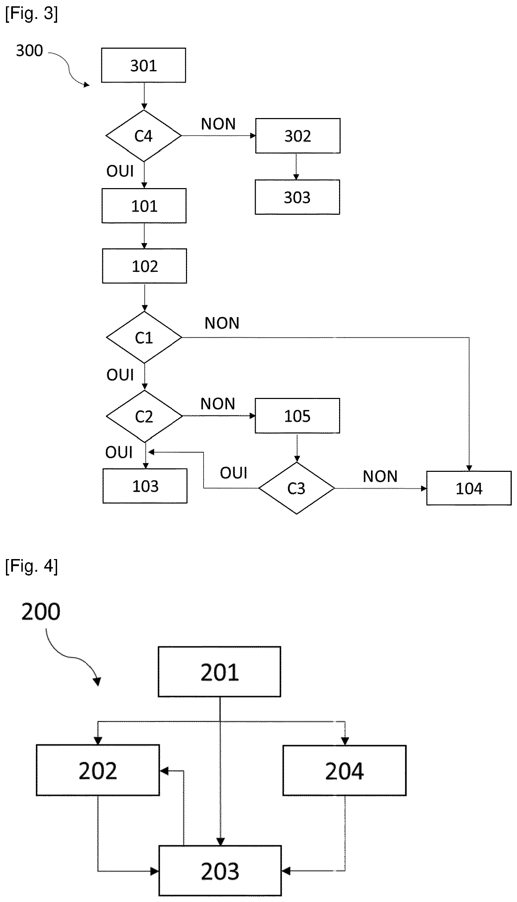

[Fig. 3] La figure 3 est un schéma synoptique illustrant l'enchaînement des étapes d'un deuxième mode de réalisation du procédé 300 selon l'invention.

Le deuxième mode de réalisation du procédé 300 selon l'invention comporte des étapes réalisées pour chaque ensemble d'images Ei comportant au moins une image à laquelle aucun ensemble d'objets n'est affecté.

Une première étape 301 du deuxième mode de réalisation du procédé 300 selon l'invention consiste à calculer un critère visuel entre la première image I1 de l'ensemble d'images Ei et la dernière image In de l'ensemble d'images Ei.

Le critère visuel est donc un indicateur de similitude, préférentiellement calculé au moyen d'une distance, d'une différence ou d'une corrélation entre la première image I1 de l'ensemble d'images Ei et la dernière image In de l'ensemble d'images Ei. Le critère visuel C est par exemple calculé de la manière suivante :

$$C = \sum_{j=1}^{M} |P_j^n - P_j^1|$$

Ou

$$C = \sqrt{\sum_{j=1}^{M} (P_j^n - P_j^1)^2}$$

Avec : $P_j^n$ , la valeur du pixel j de la dernière image In,

$P_j^1$ , la valeur du pixel j de la première image I1 et M le nombre de pixels dans chaque image de l'ensemble d'images Ei.

Un traitement, par exemple un filtrage gaussien, peut être appliqué à la première image I1 de l'ensemble d'images Ei et la dernière image In de l'ensemble d'images Ei préalablement au calcul du critère visuel.

Le critère visuel dépend alors de la valeur des pixels de la première image I1 et de la dernière image In après traitement.

Si une quatrième condition C4 n'est pas vérifiée, une deuxième étape 302 et une troisième étape 303 du deuxième mode de réalisation du procédé 300 selon l'invention sont réalisées.

La quatrième condition C4 n'est pas vérifiée si le critère visuel calculé à la première étape 301 répond à une condition de similitude.

Le critère visuel répond à la condition de similitude s'il est inférieur à un seuil de similitude.

Le seuil de similitude est par exemple égal à 0.1.

La deuxième étape 302 consiste à détecter chaque objet présent dans la première image I1 de l'ensemble d'images Ei à l'aide du réseau de neurones artificiels entraîné, et permet d'obtenir un premier ensemble d'objets, chaque objet du premier ensemble d'objets étant associé à sa position dans la première image I1, par exemple aux coordonnées d'une fenêtre englobant l'objet.

Le premier ensemble d'objets est affecté à la première image I1.

La deuxième étape 302 est réalisée uniquement si aucune détection n'a encore été réalisée pour la première image I1 de l'ensemble d'images Ei.

La troisième étape 303 consiste ensuite à affecter le premier ensemble d'objets à chaque image de l'ensemble d'images Ei.

A la fin de la troisième étape 303, un ensemble d'objets est affecté à chaque image de l'ensemble d'images Ei, et donc chaque objet présent dans l'ensemble d'images Ei a été détecté.

Si la quatrième condition C4 est vérifiée, les étapes du premier mode de réalisation du procédé 100 selon l'invention sont réalisées pour l'ensemble d'images Ei ayant pour dernière image In, la dernière image In ayant servi au calcul du critère visuel vérifiant la quatrième condition C4.

Ainsi, si le deuxième mode de réalisation du procédé 300 selon l'invention est réalisé pour le premier ensemble d'images E1 du flux d'images V, un premier critère visuel est calculé entre la première image I1 et la dernière image In du premier ensemble d'images E1 à la première étape 301. Si la quatrième condition C4 n'est pas vérifiée pour le premier critère visuel, la deuxième étape 302 et la troisième étape 303 sont réalisées, puis les étapes précédentes sont réalisées pour la dernière image In du deuxième ensemble d'images du flux d'images V, c'est-à-dire qu'un deuxième critère visuel est calculé entre la première image I1 du premier ensemble d'images E1 et la dernière image In du deuxième ensemble d'images à la première étape 301. Si la quatrième condition C4 n'est pas vérifiée pour le deuxième critère visuel, les étapes sont ensuite réalisées pour la dernière image In du troisième ensemble d'images et si la quatrième condition C4 est vérifiée, les étapes du premier mode de réalisation du procédé 100 selon l'invention sont réalisées pour le deuxième ensemble d'images.

Selon un exemple de réalisation préféré, le procédé 100, 300 selon l'invention est un procédé de détection d'usagers de la route, c'est-à-dire que les objets à détecter sont des usagers de la route comportant par exemple des piétons, des vélos, des voitures, des camions et des bus, et est par exemple destiné au comptage, c'est-à-dire que la détection réalisée par le procédé 100, 300 selon l'invention est ensuite utilisée pour comptabiliser le nombre d'usagers de la route apparaissant dans le flux d'images V. Les données de comptage pourront ensuite être utilisées par exemple pour du dimensionnement d'infrastructures.

Un deuxième aspect de l'invention concerne un calculateur pour la mise en œuvre du procédé 100, 300 selon l'invention.

[Fig. 4] La figure 4 montre une représentation schématique d'un calculateur 200 selon l'invention.

Le calculateur 200 comporte :

- un module de lecture d'images 201 configuré pour lire le flux d'images V et fournir au moins une image composant le flux d'images V ;
- un module de détection 202 configuré pour détecter à partir d'une image fournie par le module de lecture 201 ou par un module d'analyse 203, chaque objet présent dans l'image à l'aide du réseau de neurones artificiels entraîné, pour obtenir un ensemble d'objets et fournir chaque ensemble d'objets obtenu ;
- le module d'analyse 203 configuré pour vérifier chaque condition, calculer et affecter un ensemble d'objets à une image fournie par le module de lecture 201 à partir d'au moins un ensemble d'objets fourni par le module de détection 202 et pour fournir des images au module de détection 202 en cas de découpage d'un ensemble d'images.

Le module de détection 202 réalise donc la première étape 101 du premier mode de réalisation du procédé 100 selon l'invention à partir de l'image initiale fournie par le module de lecture d'images 201, la deuxième étape 102 du premier mode de réalisation du procédé 100 selon l'invention à partir de l'image finale fournie par le module de lecture d'images 201, la cinquième étape 105 du premier mode de réalisation du procédé 100 selon l'invention à partir de l'image intermédiaire fournie par le module d'analyse 203, et la deuxième étape 302 du deuxième mode de réalisation du procédé 300 selon l'invention à partir de la première image fournie par le module de lecture d'images 201, et envoie chaque ensemble d'objet obtenu au module d'analyse 203.

Le module d'analyse 203 réalise la vérification de la première condition C1, de la deuxième condition C2 et de la troisième condition C3, la troisième étape 103 du premier mode de réalisation du procédé 100 selon l'invention pour chaque image de l'ensemble d'images Ei fournie par le module de lecture d'images 201 à partir de l'ensemble d'objets initial et de l'ensemble d'objets final fournis par le module de détection 202, fournit l'image intermédiaire Ik au module de détection 202 quand la quatrième étape 104 ou la cinquième étape 105 est réalisée, réalise la vérification de la quatrième condition C4 et la troisième étape 303 du deuxième mode de réalisation du procédé 300 selon l'invention à partir du premier ensemble d'objets fourni par le module de détection 202 et pour chaque image de l'ensemble d'images Ei fournie par le module de lecture d'images 201.

Le calculateur 200 peut également comporter un module de détection visuelle 204 configuré pour calculer le critère visuel à partir d'images fournies par le module de lecture d'images 201 et fournir le critère visuel calculé au module d'analyse 203.

Le module de détection visuelle 204 réalise la première étape 301 du deuxième mode de réalisation du procédé 300 selon l'invention à partir de la première image I1 et de la dernière image In fournies par le module de lecture d'images 201.

Le calculateur 200 est par exemple un microprocesseur, le procédé 100, 300 étant alors implémentable sur un microprocesseur.

Le calculateur 200 est par exemple compris dans un dispositif, tel qu'une caméra autonome.

Dans une alternative, le réseau de neurones artificiels est également entraîné pour produire un ou plusieurs scores de catégorie. Le score de catégorie est, par exemple, une probabilité d'un objet à appartenir à une catégorie spécifique.

Le réseau de neurones artificiels est ainsi préalablement entraîné de manière supervisée sur une base de données de classification pour obtenir un réseau de neurones artificiels entraîné capable de classifier chaque objet détecté dans l'image.

La classification repose sur la classification en plusieurs catégories. Préférentiellement, le réseau de neurone artificiels produit un score de catégorie pour chaque catégorie de la classification pour chaque objet identifié. Les catégories de la classification sont préalablement définies par un opérateur en fonction de l'application souhaitée. Par exemple, dans le cas d'une image comportant des usagers de la voie publique, le réseau de neurones artificiels produit une probabilité d'appartenance aux classes suivantes pour chaque objet identifié dans l'image : voiture, bus/autocar, camionnette, poids lourd, vélo, piéton. Chaque objet de l'image est ainsi classifié dans la catégorie pour laquelle le score de catégorie dudit objet est le plus haut.

Ainsi, la base de données d'entraînement comporte également une pluralité d'images de classification et pour chaque image, la catégorie de chaque objet dans l'image, de sorte que chaque catégorie de la classification soit comprise par au moins une des images de classification.

Dans ce cas :

- La première étape 101 du premier mode de réalisation du procédé 100 selon l'invention consiste en outre à déterminer le ou les scores de catégorie, à l'aide d'un réseau de neurones artificiels entraîné, pour chaque objet de l'ensemble d'objets initial, et à attribuer une catégorie à chacun desdits objets, la catégorie attribuée étant celle du score de catégorie de plus élevé dudit objet.
- La deuxième étape 102 du premier mode de réalisation du procédé 100 selon l'invention consiste en outre à déterminer le ou les scores de catégorie, à l'aide d'un réseau de neurones artificiels entraîné, pour chaque objet de l'ensemble d'objets final et à attribuer une catégorie à chacun desdits objets, la catégorie attribuée étant celle du score de catégorie de plus élevé dudit objet.
- La troisième étape 103 consiste en outre à attribuer une catégorie à chaque objet de l'ensemble d'objets de chaque image de l'ensemble d'images Ei comprise entre l'image initiale et l'image finale. La catégorie de chaque objet de l'ensemble d'objets est calculée par interpolation linéaire à partir de l'ensemble d'objets initial et de l'ensemble d'objets final. C'est-à-dire que la catégorie de chaque objet de l'ensemble d'objets est déterminée par interpolation linéaire entre le ou les scores de catégorie de l'objet de l'ensemble d'objets initial et le ou les scores de catégorie de l'objet de l'ensemble d'objets final correspondant. La catégorie de chaque objet de l'ensemble d'objets est alors celle dont le score de catégorie de l'objet est le plus élevé.

L'intérêt d'une telle alternative est de prendre en compte un éventuel changement de catégorie de l'un ou plusieurs des objets dans l'image. Par exemple, dans un flux d'images d'usagers de la voie publique, un usager peut passer de la catégorie « piéton » à la catégorie « cycliste » entre l'image initiale et l'image finale, par exemple parce que de loin ou de dos le cycliste peut ressembler à un piéton. Un tel changement de catégorie est, entre autres, lié à des variations de l'environnement dans lequel se trouvent les objets telles que l'éclairage, la distance de l'objet, son orientation, un masquage partiel de l'objet, la position dans la scène, etc. Ce changement de catégorie peut aussi être dépendant de caractéristiques du moyen d'acquisition des images, telles que la profondeur de champ, la distance focale, la résolution, le contraste, la sensibilité de l'objectif, etc.

Préférentiellement, les scores de catégorie sont normalisés de sorte que la somme des scores de catégorie pour chaque objet de l'une des images est égale à 1. C'est-à-dire que la somme des probabilités d'appartenance à chaque catégorie d'un des objets de l'une des images est unitaire. Avantageusement, l'interpolation linéaire permet de conserver cette propriété pour chaque objet de chaque image comprise entre l'image initiale et l'image finale.

Alternativement, il est possible d'utiliser un outil de classification autre que le réseau de neurones artificiels entraîné afin de déterminer le ou les scores de catégorie.

**Revendications**

1. Procédé (100) automatique de détection d'objets dans un flux d'images (V), implémentable sur un microprocesseur, le flux d'images (V) comprenant une pluralité d'ensembles d'images (Ei) successifs ayant chacun pour image initiale une première image (I1) et pour image finale une dernière image (In), le procédé (100) comportant les étapes suivantes pour chaque ensemble d'images (Ei) du flux d'images (V) :

- Si aucune détection n'a été réalisée pour l'image initiale de l'ensemble d'images (Ei), détection de chaque objet présent dans l'image initiale à l'aide d'un réseau de neurones artificiels pour obtenir un ensemble d'objets initial affecté à l'image initiale, le réseau de neurones artificiels ayant été préalablement entraîné de manière supervisée sur une base de données d'entraînement pour obtenir un réseau de neurones artificiels entraîné capable de détecter à partir d'une image, chaque objet dans l'image, la base de données d'entraînement comprenant une pluralité d'images chacune associée à la position de chaque objet dans l'image (101) ;
- Si aucune détection n'a été réalisée pour l'image finale de l'ensemble d'images (Ei), détection de chaque objet présent dans l'image finale à l'aide du réseau de neurones artificiels pour obtenir un ensemble d'objets final affecté à l'image finale (102) ;
- Si une première condition (C1) selon laquelle l'ensemble d'objets initial comporte le même nombre d'objets que l'ensemble d'objets final et une deuxième condition (C2) selon laquelle chaque objet de l'ensemble d'objets initial répond à une première condition de couplage avec un objet de l'ensemble d'objets final différent sont vérifiées, affectation d'un ensemble d'objets à chaque image de l'ensemble d'images (Ei) comprise entre l'image initiale et l'image finale, l'ensemble d'objets étant obtenu par interpolation linéaire à partir de l'ensemble d'objets initial et de l'ensemble d'objets final (103), la première condition de couplage portant sur une distance géométrique calculée entre chaque objet de l'ensemble d'objets initial et l'objet de l'ensemble d'objets final différent, l'interpolation linéaire interpolant la position de chaque objet de l'ensemble d'objets dans chaque image de l'ensemble d'images comprise entre l'image initiale et l'image finale à partir de la position dans l'image initiale des objets de l'ensemble d'objets initial et de la position dans l'image finale des objets de l'ensemble d'objets final différent;
- Sinon, découpage de l'ensemble d'images (Ei) en un premier sous-ensemble d'images (SE1) ayant pour image initiale la première image (I1) de l'ensemble d'images (Ei) et pour image finale une image intermédiaire (Ik) de l'ensemble d'images (Ei) comprise entre l'image initiale et l'image finale de l'ensemble d'images (Ei), et en un deuxième sous-ensemble d'images (SE2) ayant pour image initiale l'image intermédiaire (Ik) et pour image finale la dernière image (In) de l'ensemble d'images (Ei, 104), puis réalisation des étapes précédentes pour le premier sous-ensemble d'images (SE1) et pour le deuxième sous-ensemble d'images (SE2).

2. Procédé (100) selon la revendication 1, comportant les étapes suivantes si la première condition (C1) est vérifiée et si la deuxième condition (C2) n'est pas vérifiée pour le premier sous-ensemble d'images (SE1) ou le deuxième sous-ensemble d'images (SE2) :

- Détection de chaque objet présent dans l'image intermédiaire (Ik) à l'aide du réseau de neurones artificiels pour obtenir un ensemble d'objets intermédiaire affecté à l'image intermédiaire (Ik, 105) ;
- Si une troisième condition (C3) est vérifiée, la deuxième condition (C2) est considérée comme vérifiée, la troisième condition (C3) étant vérifiée pour le premier sous-ensemble d'images (SE1) si l'ensemble d'objets initial comporte le même nombre d'objets que l'ensemble d'objets intermédiaire et si chaque objet de l'ensemble d'objets initial répond à une deuxième condition de couplage avec un objet de l'ensemble d'objets intermédiaire différent et pour le deuxième sous-ensemble d'images (SE2) si l'ensemble d'objets intermédiaire comporte le même nombre d'objets que l'ensemble d'objets final et si chaque objet de l'ensemble d'objets intermédiaire répond à la deuxième condition de couplage avec un objet de l'ensemble d'objets final différent.

3. Procédé (100) selon l'une des revendications 1 et 2, dans lequel :

- L'étape de détection de chaque objet présent dans l'image initiale (101) consiste en outre à déterminer un ou plusieurs scores de catégorie, à l'aide d'un réseau de neurones artificiels entraîné, pour chaque objet de l'ensemble d'objets initial, et à attribuer une catégorie à chaque objet de l'ensemble d'objets initial ;
- L'étape détection de chaque objet présent dans l'image finale (102) consiste en outre à déterminer un ou plusieurs scores de catégorie, à l'aide d'un réseau de neurones artificiels entraîné, pour chaque objet de l'ensemble d'objets final et à attribuer une catégorie à chaque objet de l'ensemble d'objets final ;
- L'étape d'affectation (103) d'un ensemble d'objets à chaque image de l'ensemble d'images (Ei) comprise entre l'image initiale et l'image finale consiste en outre à attribuer une catégorie à chaque objet de l'ensemble d'objets de chaque image de l'ensemble d'images (Ei) comprise entre l'image initiale et l'image finale, la catégorie de chaque objet de l'ensemble d'objets étant calculée par interpolation linéaire à partir de l'ensemble d'objets initial et de l'ensemble d'objets final.

4. Procédé (300) automatique de détection d'objets dans un flux d'images (V), implémentable sur un microprocesseur, le flux d'images (V) comprenant une pluralité d'ensembles d'images (Ei) successifs, le procédé (300) comportant les étapes suivantes :

- Pour chaque ensemble d'images (Ei) comportant au moins une image à laquelle aucun ensemble d'objets n'est affecté :

    o Calcul d'un critère visuel entre la première image (I1) de l'ensemble d'images et la dernière image (In) de l'ensemble d'images (Ei, 301), le critère visuel étant déterminé à partir d'une distance, d'une différence ou d'une corrélation entre la première image (I1) de l'ensemble d'images (Ei) et la dernière image (In) de l'ensemble d'images (Ei) ;

    ◦ Si une quatrième condition (C4) selon laquelle le critère visuel ne répond pas à une condition de similitude est vérifiée, les étapes du procédé (100) selon l'une quelconque des revendications précédentes sont réalisées pour l'ensemble d'images (Ei) ayant pour dernière image (In), la dernière image (In) ayant servi au calcul du critère visuel vérifiant la quatrième condition (C4);

    ◦ Si la quatrième condition (C4) n'est pas vérifiée :

        • Si aucune détection n'a été réalisée pour la première image (I1) de l'ensemble d'images (Ei), détection de chaque objet présent dans la première image (I1) à l'aide du réseau de neurones artificiels entraîné, pour obtenir un premier ensemble d'objets affecté à la première image (I1, 302) ;
        • Affectation du premier ensemble d'objets à chaque image de l'ensemble d'images (303), puis réalisation des étapes précédentes pour la dernière image (In) de l'ensemble d'images (Ei) suivant l'ensemble d'images (Ei) dans le flux d'images (V).

5. Procédé (100, 300) selon l'une quelconque des revendications précédentes, dans lequel les objets à détecter sont des usagers de la route.

6. Calculateur (200) pour la mise en œuvre du procédé (100, 300) selon l'une quelconque des revendications précédentes, comportant :

- un module de lecture d'images (201) configuré pour lire le flux d'images (V) et fournir au moins une image composant le flux d'images (V) ;
- un module de détection (202) configuré pour détecter à partir d'une image fournie par le module de lecture (201) ou par un module d'analyse (203), chaque objet présent dans l'image à l'aide d'un réseau de neurones artificiels entraîné, pour obtenir un ensemble d'objets et fournir chaque ensemble d'objets obtenu ;
- le module d'analyse (203) configuré pour vérifier chaque condition, calculer et affecter un ensemble d'objets à une image fournie par le module de lecture (201) à partir d'au moins un ensemble d'objets fourni par le module de détection (202) et pour fournir des images au module de détection (202) en cas de découpage d'un ensemble d'images.

7. Calculateur (200) selon la revendication 6, étant un microprocesseur.

8. Calculateur (200) selon la revendication 6 ou 7, comportant en outre un module de détection visuelle (204) configuré pour calculer un critère visuel à partir d'images fournies par le module de lecture d'images (201) et fournir le critère visuel calculé au module d'analyse (203).

9. Dispositif embarquant un calculateur (200) selon l'une quelconque des revendications 6 à 8.

10. Produit-programme d'ordinateur comprenant des instructions qui, lorsque le programme est exécuté par un ordinateur, conduisent celui-ci à mettre en œuvre les étapes du procédé selon l'une quelconque des revendications 1 à 5.

11. Support d'enregistrement lisible par ordinateur comprenant des instructions qui, lorsqu'elles sont exécutées par un ordinateur, conduisent celui-ci à mettre en œuvre les étapes du procédé selon l'une quelconque des revendications 1 à 5.

**Patentansprüche**

1. Automatisches Verfahren (100) zum Erkennen von Objekten in einem Bilderstrom (V), das auf einem Mikroprozessor implementierbar ist, wobei der Bilderstrom (V) eine Vielzahl aufeinanderfolgender Bildergruppen (Ei) umfasst, die jeweils ein erstes Bild (11) als Ausgangsbild und ein letztes Bild (In) als Endbild aufweisen, wobei das Verfahren (100) für jede Bildergruppe (Ei) des Bilderstroms (V) die folgenden Schritte umfasst:

- Wenn für das Ausgangsbild der Bildergruppe (Ei) keine Erkennung durchgeführt wurde, Erkennung jedes im Ausgangsbild vorhandenen Objekts mithilfe eines künstlichen neuronalen Netzes, um eine dem Ausgangsbild zugeordnete Ausgangsobjektgruppe zu erhalten, wobei das künstliche neuronale Netz zuvor auf einer Trainingsdatenbank überwacht trainiert wurde, um ein trainiertes künstliches neuronales Netz zu erhalten, das in der Lage ist, aus einem Bild jedes Objekt im Bild erkennen zu können, wobei die Trainingsdatenbank eine Vielzahl von Bildern umfasst, die jeweils der Position jedes Objekts im Bild (101) zugeordnet sind;
- Wenn für das Endbild der Bildergruppe (Ei) keine Erkennung durchgeführt wurde, Erkennung jedes im Endbild vorhandenen Objekts mithilfe des künstlichen neuronalen Netzes, um eine Endobjektgruppe zu erhalten, die dem Endbild zugeordnet ist (102);
- Wenn eine erste Bedingung (C1), wonach die Ausgangsobjektgruppe die gleiche Anzahl von Objekten wie die Endobjektgruppe umfasst, und eine zweite Bedingung (C2), wonach jedes Objekt der Ausgangsobjektgruppe eine erste Bedingung der Kopplung mit einem Objekt der Endobjektgruppe erfüllt, erfüllt sind, Zuweisung einer Objektgruppe zu jedem Bild der Bildergruppe (Ei) zwischen dem Ausgangsbild und dem Endbild, wobei die Objektgruppe durch lineare Interpolation aus der Ausgangsobjektgruppe und der Endobjektgruppe (103) erhalten wird, wobei sich die erste Kopplungsbedingung auf einen berechneten geometrischen Abstand zwischen jedem Objekt der Ausgangsobjektgruppe und dem Objekt der ungleichen Endobjektgruppe bezieht, wobei die lineare Interpolation die Position jedes Objekts der Objektgruppe in jedem Bild der Bildergruppe zwischen dem Ausgangsbild und dem Endbild ausgehend von der Position der Objekte der Ausgangsobjektgruppe im Ausgangsbild und der Position der Objekte der ungleichen Endobjektgruppe im Endbild interpoliert;
- Ansonsten Aufteilen der Bildergruppe (Ei) in eine erste Untergruppe von Bildern (SE1), deren Ausgangsbild das erste Bild (11) der Bildergruppe (Ei) ist und deren Endbild ein Zwischenbild (Ik) der Bildergruppe (Ei) ist, das zwischen dem Ausgangsbild und dem Endbild der Bildergruppe (Ei) liegt, und in eine zweite Untergruppe von Bildern (SE2), deren Ausgangsbild das Zwischenbild (Ik) und deren Endbild das letzte Bild (In) der Bildergruppe (Ei, 104) ist, und anschließende Durchführung der vorhergehenden Schritte für die erste Untergruppe von Bildern (SE1) und für die zweite Untergruppe von Bildern (SE2).

2. Verfahren (100) nach Anspruch 1, das die folgenden Schritte umfasst, wenn die erste Bedingung (C1) erfüllt ist und die zweite Bedingung (C2) für die erste Untergruppe von Bildern (SE1) oder die zweite Untergruppe von Bildern (SE2) nicht erfüllt ist:

- Erkennen jedes im Zwischenbild (Ik) vorhandenen Objekts mithilfe des künstlichen neuronalen Netzes, um eine dem Zwischenbild (Ik, 105) zugeordnete intermediäre Objektgruppe zu erhalten;
- Wenn eine dritte Bedingung (C3) erfüllt ist, gilt die zweite Bedingung (C2) als erfüllt, wobei die dritte Bedingung (C3) für die erste Untergruppe von Bildern (SE1) erfüllt ist, wenn die Ausgangsobjektgruppe die gleiche Anzahl von Objekten wie die intermediäre Objektgruppe enthält und wenn jedes Objekt der Ausgangsobjektgruppe eine zweite Bedingung für die Kopplung mit einem Objekt der ungleichen intermediären Objektgruppe erfüllt, und für die zweite Untergruppe (SE2) erfüllt ist, wenn die intermediäre Objektgruppe die gleiche Anzahl von Objekten wie die Endobjektgruppe aufweist und wenn jedes Objekt der intermediären Objektgruppe die zweite Bedingung für die Kopplung mit einem Objekt der ungleichen Endobjektgruppe erfüllt.

3. Verfahren (100) nach einem der Ansprüche 1 und 2, bei dem:

   - Der Schritt des Erkennens jedes in dem Ausgangsbild (101) vorhandenen Objekts ferner mithilfe eines trainierten künstlichen neuronalen Netzes das Bestimmen einer oder mehrerer Kategoriebewertungen für jedes Objekt der Ausgangsobjektgruppe und das Zuweisen einer Kategorie zu jedem Objekt der Ausgangsobjektgruppe umfasst;
   - Der Schritt des Erkennens jedes im Endbild vorhandenen Objekts (102) außerdem mithilfe eines trainierten künstlichen neuronalen Netzes das Bestimmen einer oder mehrerer Kategoriebewertungen für jedes Objekt der Endobjektgruppe und das Zuweisen einer Kategorie zu jedem Objekt der Endobjektgruppe umfasst;
   - Der Schritt der Zuordnung (103) einer Objektgruppe zu jedem Bild der Bildergruppe (Ei) zwischen dem Ausgangsbild und dem Endbild außerdem darin besteht, jedem Objekt der Objektgruppe jedes Bildes der Bildergruppe (Ei) zwischen dem Ausgangsbild und dem Endbild eine Kategorie zuzuweisen, wobei die Kategorie jedes Objekts der Objektgruppe durch lineare Interpolation aus der Ausgangsobjektgruppe und der Endobjektgruppe berechnet wird.

4. Automatisches Verfahren (300) zum Erkennen von Objekten in einem Bilderstrom (V), das auf einem Mikroprozessor implementierbar ist, wobei der Bilderstrom (V) eine Vielzahl aufeinanderfolgender Bildergruppen (Ei) umfasst, wobei das Verfahren (300) die folgenden Schritte umfasst:

   - Für jede Bildergruppe (Ei), die mindestens ein Bild umfasst, dem keine Objektgruppe zugeordnet ist:

     ◦ Berechnung eines visuellen Kriteriums zwischen dem ersten Bild (I1) der Bildergruppe und dem letzten Bild (In) der Bildergruppe (Ei, 301), wobei das visuelle Kriterium anhand eines Abstands, eines Unterschieds oder einer Korrelation zwischen dem ersten Bild (I1) der Bildergruppe (Ei) und dem letzten Bild (In) der Bildergruppe (Ei) bestimmt wird;
     ◦ Wenn eine vierte Bedingung (C4) erfüllt ist, wonach das visuelle Kriterium keine Ähnlichkeitsbedingung erfüllt, werden die Schritte des Verfahrens (100) gemäß einem der vorstehenden Ansprüche für die Bildergruppe (Ei) durchgeführt, deren letztes Bild (In) zur Berechnung des visuellen Kriteriums verwendet wurde, das die vierte Bedingung (C4) erfüllt;
     ◦ Wenn die vierte Bedingung (C4) nicht erfüllt ist:

       ▪ Wenn für das erste Bild (I1) der Bildergruppe (Ei) keine Erkennung durchgeführt wurde, Erkennung jedes im ersten Bild (I1) vorhandenen Objekts mithilfe des trainierten künstlichen neuronalen Netzes, um eine erste Objektgruppe zu erhalten, die dem ersten Bild (I1, 302) zugeordnet ist;
       ▪ Zuweisung der ersten Objektgruppe zu jedem Bild der Bildergruppe (303), dann Durchführung der vorhergehenden Schritte für das letzte Bild (In) der Bildergruppe (Ei) gemäß der Bildergruppe (Ei) im Bilderstrom (V).

5. Verfahren (100, 300) nach einem der vorstehenden Ansprüche, bei dem die zu erkennenden Objekte Verkehrsteilnehmer sind.

6. Rechner (200) zur Durchführung des Verfahrens (100, 300) nach einem der vorstehenden Ansprüche, mit:

   - einem Bildlesemodul (201), das so konfiguriert ist, dass es den Bilderstrom (V) liest und mindestens ein Bild bereitstellt, das den Bilderstrom (V) bildet;
   - einem Erkennungsmodul (202), das so konfiguriert ist, dass es anhand eines vom Lesemodul (201) oder einem Analysemodul (203) gelieferten Bildes jedes im Bild vorhandene Objekt mithilfe eines trainierten künstlichen neuronalen Netzes erkennt, um eine Objektgruppe zu erhalten und jede erhaltene Objektgruppe bereitzustellen;
   - dem Analysemodul (203), das so konfiguriert ist, dass es jede Bedingung überprüft, eine Objektgruppe berechnet und einem vom Lesemodul (202) aus mindestens einer vom Erkennungsmodul (202) bereitgestellten Bild zuordnet und dem Erkennungsmodul (202) Bilder bereitstellt, wenn eine Bildergruppe ausgeschnitten wird.

7. Rechner (200) nach Anspruch 6, wobei dieser ein Mikroprozessor ist.

**8.** Rechner (200) nach Anspruch 6 oder 7, der ferner ein visuelles Erkennungsmodul (204) umfasst, das so konfiguriert ist, dass es ein visuelles Kriterium aus Bildern berechnet, die vom Bildlesemodul (201) bereitgestellt werden, und dem Analysemodul (203) das berechnete visuelle Kriterium bereitstellt.

**9.** Vorrichtung mit einem Rechner (200) nach einem der Ansprüche 6 bis 8.

**10.** Computerprogrammprodukt, das Anweisungen umfasst, die, wenn das Programm von einem Computer ausgeführt wird, diesen dazu veranlassen, die Schritte des Verfahrens gemäß einem der Ansprüche 1 bis 5 durchzuführen.

**11.** Computerlesbares Aufzeichnungsmedium mit Anweisungen, die, wenn sie von einem Computer ausgeführt werden, diesen veranlassen, die Schritte des Verfahrens gemäß einem der Ansprüche 1 bis 5 auszuführen.

**Claims**

**1.** An automatic method (100) for detection of objects in an image stream (V), implementable on a microprocessor, the image stream (V) comprising a plurality of successive sets of images (Ei), each having a first image (11) as its initial image and a last image (In) as its final image, the method (100) including the following steps for each set of images (Ei) in the image stream (V):

- If no detection has been performed for the initial image of the set of images (Ei), detecting each object present in the initial image using an artificial neural network to obtain an initial set of objects assigned to the initial image, the artificial neural network having been previously trained in a supervised manner on a training database to obtain a trained artificial neural network capable of detecting, from an image, each object in the image, the training database comprising a plurality of images each associated with the position of each object in the image (101);
- If no detection has been performed for the final image of the set of images (Ei), detecting each object present in the final image using the artificial neural network to obtain a final set of objects assigned to the final image (102);
- If a first condition (C1) according to which the initial set of objects includes the same number of objects as the final set of objects and a second condition (C2) according to which each object in the initial set of objects meets a first condition for coupling with a different object in the final set of objects are satisfied, assigning a set of objects to each image in the set of images (Ei) between the initial image and the final image, the set of objects being obtained by linear interpolation from the initial set of objects and the final set of objects (103), the first coupling condition concerning a geometric distance calculated between each object in the initial set of objects and the object in the different final set of objects, the linear interpolation interpolating the position of each object in the set of objects in each image in the set of images between the initial image and the final image from the position in the initial image of the objects in the initial set of objects and the position in the final image of the objects in the different final set of objects;
- Otherwise, splitting the set of images (Ei) into a first subset of images (SE1) having as its initial image the first image (11) of the set of images (Ei) and as its final image an intermediate image (Ik) of the set of images (Ei) between the initial image and the final image of the set of images (Ei), and into a second subset of images (SE2) having as its initial image the intermediate image (Ik) and as its final image the last image (In) of the set of images (Ei, 104), and then performing the preceding steps for the first subset of images (SE1) and for the second subset of images (SE2).

**2.** The method (100) according to claim 1, including the following steps if the first condition (C1) is satisfied and if the second condition (C2) is not satisfied for the first subset of images (SE1) or the second subset of images (SE2):

- Detecting each object present in the intermediate image (Ik) using the artificial neural network to obtain an intermediate set of objects assigned to the intermediate image (Ik, 105);
- If a third condition (C3) is satisfied, the second condition (C2) is considered to be satisfied, the third condition (C3) being satisfied for the first subset of images (SE1) if the initial set of objects includes the same number of objects as the intermediate set of objects and if each object in the initial set of objects meets a second condition of coupling with a different object in the intermediate set of objects, and for the second subset of images (SE2) if the intermediate set of objects includes the same number of objects as the final set of objects and if each object in the intermediate set of objects meets the second coupling condition with a different object in the final set of objects.

**3.** The method (100) according to one of claims 1 and 2, wherein:

- The step of detecting each object present in the initial image (101) further consists in determining one or more category scores, using a trained artificial neural network, for each object in the initial set of objects, and assigning a category to each object in the initial set of objects;
- The step of detecting each object present in the final image (102) further consists in determining one or more category scores, using a trained artificial neural network, for each object in the final set of objects and assigning a category to each object in the final set of objects;
- The step of assigning (103) a set of objects to each image in the set of images (Ei) between the initial image and the final image further consists in assigning a category to each object in the set of objects in each image in the set of images (Ei) between the initial image and the final image, the category of each object in the set of objects being calculated by linear interpolation from the initial set of objects and the final set of objects.

4. An automatic method (300) for detection of objects in an image stream (V), implementable on a microprocessor, the image stream (V) comprising a plurality of successive sets of images (Ei), the method (300) including the following steps:

- For each set of images (Ei) including at least one image to which no set of objects is assigned:

  ○ Calculating a visual criterion between the first image (I1) of the set of images and the last image (In) of the set of images (Ei, 301), the visual criterion being determined from a distance, a difference or a correlation between the first image (I1) of the set of images (Ei) and the last image (In) of the set of images (Ei);
  ○ If a fourth condition (C4) according to which the visual criterion does not meet a similarity condition is satisfied, the steps of the method (100) according to any of the preceding claims are performed for the set of images (Ei) having as its last image (In), the last image (In) that served to calculate the visual criterion satisfying the fourth condition (C4);
  ○ If the fourth condition (C4) is not satisfied:

    ▪ If no detection has been performed for the first image (I1) of the set of images (Ei), detecting each object present in the first image (I1) using the trained artificial neural network, to obtain a first set of objects assigned to the first image (I1, 302);

    ▪ Assigning the first set of objects to each image in the set of images (303), and then performing the preceding steps for the last image (In) in the set of images (Ei) following the set of images (Ei) in the image stream (V).

5. The method (100, 300) according to any of the preceding claims, wherein the objects to be detected are road users.

6. A calculator (200) for the implementation of the method (100, 300) according to any of the preceding claims, including:

  - an image reading module (201) configured to read the image stream (V) and provide at least one image composing the image stream (V);
  - a detection module (202) configured to detect, from an image provided by the reading module (201) or by an analysis module (203), each object present in the image using a trained artificial neural network, to obtain a set of objects and provide each set of objects obtained;
  - the analysis module (203) configured to satisfy each condition, calculate and assign the set of objects to an image provided by the reading module (201) from at least one set of objects provided by the detection module (202) and to provide images to the detection module (202) in the event of splitting a set of images.

7. The calculator (200) according to claim 6, being a microprocessor.

8. The calculator (200) according to claim 6 or 7, further including a visual detection module (204) configured to calculate a visual criterion from images provided by the image reading module (201) and to provide the visual criterion calculated to the analysis module (203).

9. A device incorporating a calculator (200) according to any of claims 6 to 8.

10. A computer program product comprising instructions which, when executed by a computer, cause the same to implement the steps of the method according to any one of claims 1 to 5.

11. A computer-readable recording medium comprising instructions which, when executed by a computer, cause the same to implement the steps of the method according to any one of claims 1 to 5.

[Fig. 1]

[Fig. 2]

[Fig. 3]

[Fig. 4]

# EP 4 170 603 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021264153 A1